# EUROPEAN PATENT SPECIFICATION

(11) **EP 0 679 976 B1**
(45) Date of publication and mention of the grant of the patent: **09.01.2002**
(21) Application number: 95110799.4
(22) Date of filing: 10.12.1990
(51) Int. Cl.: G05D 1/02

(54) **Integrated vehicle positioning and navigation system, apparatus and method**
Integriertes Fahrzeugpositionier- und -navigationssystem; dessen Vorrichtung und Verfahren
Procédé, appareil et système de navigation et de positionnement intégrés pour véhicules

(30) Priority: 11.12.1989 WO PCT/US89/05580
(43) Date of publication of application: 02.11.1995
(62) Divisional of application: 91902277.2
(73) Proprietor: CATERPILLAR INC., Peoria Illinois 61629-6490 (US)
(72) Inventor: Kyrtsos, Christos T., Southfield, Michigan 48076 (US); Gudat, Adam J., Edelstein, Illinois 61516 (US); Christensen, Dana A., Dunlap, Illinois 61525 (US); Friedrich, Douglas W., Pekin, Illinois 61554 (US); Stafford, Darrell E., Dunlap, Illinois 61525 (US); Sennott, James W., Bloomington, Illinois 61701 (US); Bradbury, Walter J., Ontario L4B 3G1 (CA); Clow, Richard G., Mesa, Arizona 85202 (US); Devier, Lonnie J., Dunlap, Illinois 61525 (US); Kemner, Carl A., Peoria Heights, Illinois 61614 (US); Kleimenhagen, Karl W., Peoria, Illinois 61614 (US); Koehrsen, Craig L., Peoria, Illinois 61604 (US); Lay, Norman K., Peoria, Illinois 61615 (US); Peterson, Joel L., East Peoria, Illinois 616115 (US); Rao, Prithvi N., Pittsburgh, Pennsylvania 15202 (US); Schmidt, Larry E., Chillicothe, Illinois 61523 (US); Shaffer, Gary K., Butler, Pennsylvania 16001 (US); Shi, WenFan, Pittsburgh, Pennsylvania 15237 (US); Shin, Dong Hun, Guro-Gui, Guro 1, Dong S Seoul (KR); Singh, Sanjiv J., Pittsburgh, Pennsylvania 15217 (US); Weinbeck, Louis J., Livingston, Texas 77351 (US); West, Jay H., Junction City, Kansas 66441 (US); Whittaker, William L., Pittsburgh, Pennsylvania 15207 (US); Wu, BaoXin (NMI), Pittsburgh, Pennsylvania 15217 (US)
(74) Representative: Brunner, Michael John

(56) References cited:
- WO-A-87/07056
- US-A- 4 709 195
- US-A- 4 849 731
- PROCEEDINGS PR'88, THE COMPUTER SOCIETY CONFERENCE ON COMPUTER VISION AND PATTERN RECOGNITION, 5-9 JUNE 1988 (ANN ARBOR, US), pages 826-831, S. DICKINSON ET AL. 'An Expert Vision System for Autonomous Land Vehicle Road Following'
- IEEE JOURNAL OF ROBOTICS AND AUTOMATION, vol. 4, no. 4, August 1988 NEW YORK US, pages 419-427, J. LE MOIGNE 'Domain-Dependent Reasoning for Visual Navigation of Roadways'
- IEEE JOURNAL OF ROBOTICS AND AUTOMATION, vol. 4, June 1988 NEW YORK US, pages 241-255, C. ISIK ET AL. 'Pilot Level of a Hierarchical Controller for an Unmanned Mobile Robot'
- IEEE TRANSACTIONS ON PATTERN ANALYSIS AND MACHINE INTELLIGENCE, vol. 10, no. 5, September 1988 NEW YORK US, pages 648-658, D. KUAN ET AL. 'Autonomous Robotic Vehicle Road Following'
- PROCEEDINGS 1987 IEEE INTERNATIONAL CONFERENCE ON ROBOTICS AND AUTOMATION, 31 MARCH- 3 APRIL 1987, RALEIGH, US; SPONSORED BY IEEE COUNCIL ON ROBOTICS AND AUTOMATION, VOL. 3., pages 1444-1449, D. DEMENTHON 'A Zero-Bank algorithm for inverse perspective of a road from a single image'

## Description

### Background of the Invention

### 1. Field of the Invention

The present invention relates to positioning systems, and more particularly, to a positioning system and method for determining the terrestrial position of an autonomous vehicle on or near the planet Earth's surface.

### 2. Related Art

Several national governments, including the United States (U.S.) of America, are presently developing a terrestrial position determination system, referred to generically as a global positioning system (GPS). In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined.

The U.S. government has designated its GPS the "NAVSTAR." The NAVSTAR GPS will be declared operational by the U.S. government in 1993. Moreover, the government of the Union of Soviet Socialist Republics (U.S.S.R.) is currently developing a GPS known as "GLONASS," which is substantially similar to the NAVSTAR GPS.

In the NAVSTAR GPS, it is envisioned that four orbiting GPS satellites will exist in each of six separate orbits. A total of 24 GPS satellites will be in orbit at any given time with 21 GPS satellites in operation and 3 GPS satellites serving as spares. The three GPS satellite orbits will have mutually orthogonal planes relative to the Earth. The GPS satellite orbits will be neither polar orbits nor equatorial orbits. Moreover, the GPS satellites will orbit the Earth once every 12 hours.

Using the NAVSTAR GPS, the relative position of orbiting GPS satellites with respect to any Earth receiver can be determined from the electromagnetic signals. The relative position is commonly referred to as a "pseudorange." Moreover, the relative position can be calculated by two methods.

One method is to measure the propagation time delays between transmission and reception of the emanating electromagnetic signals. In the NAVSTAR GPS, the electromagnetic signals are encoded continuously with the time at which the signals are transmitted from the GPS satellites. Needless to say, one can make note of the reception time and subtract the encoded transmission time in order to derive time delays. From the calculated time delays and from knowing the speed at which electromagnetic waves travel through the atmosphere, pseudoranges can be accurately derived. Pseudoranges computed using the foregoing method are referred to in the context of this document as "actual" pseudoranges.

Another method involves satellite position data that is encoded in the electromagnetic signals being transmitted from the orbiting satellites. Almanac data relating to the satellite position data of the NAVSTAR GPS is publicly available. Reference to this almanac data in regard to data encoded in the electromagnetic signals allows for an accurate derivation of pseudoranges. Pseudoranges computed using the foregoing method are referred to in the context of this document as "estimated" pseudoranges.

However, with respect to the previous method of deriving estimated pseudoranges, it should be noted that the satellite position data is updated at the GPS satellite only once an hour on the hour. Consequently, an estimated pseudorange decreases in accuracy over time after each hour until the next hour, when a new estimated pseudorange is computed using updated satellite position data.

Furthermore, by knowing the relative position of at least three of the orbiting GPS satellites, the absolute terrestrial position (that is, longitude, latitude, and altitude with respect to the Earth's center) of any Earth receiver can be computed via simple geometric theory involving triangulation methods. The accuracy of the terrestrial position estimate depends in part on the number of orbiting GPS satellites that are sampled. Using more GPS satellites in the computation can increase the accuracy of the terrestrial position estimate.

Conventionally, four GPS satellites are sampled to determine each terrestrial position estimate because of errors contributed by circuit clock differentials among the Earth receiver and the various GPS satellites. Clock differentials could be several milliseconds. If the Earth receiver's clock were synchronized with that of the GPS satellites, then only three GPS satellites would need to be sampled to pinpoint the location of the Earth receiver.

In the NAVSTAR GPS, electromagnetic signals are continuously transmitted from all of the GPS satellites at a single carrier frequency. However, each of the GPS satellites has a different modulation scheme, thereby allowing for differentiation of the signals. In the NAVSTAR GPS, the carrier frequency is modulated using a pseudorandom signal which is unique to each GPS satellite. Consequently, the orbiting GPS satellites in the NAVSTAR GPS can be identified when the carrier frequencies are demodulated.

Furthermore, the NAVSTAR GPS envisions two modes of modulating the carrier wave using pseudorandom number (PRN) signals. In one mode, referred to as the "coarse/acquisition" (C/A) mode, the PRN signal is a gold code sequence having a chip rate of 1.023 MHz. The gold code sequence is a well-known conventional pseudorandom sequence in the art. A chip is one individual pulse of the pseudorandom code. The chip rate of a pseudorandom code sequence is the rate at which the chips in the sequence are generated. Consequently, the chip rate is equal to the code repetition rate divided by the number of members in the code. Accordingly, with respect to the coarse/acquisition mode of the NAVSTAR GPS, there exists 1,023 chips in each gold code sequence and the sequence is repeated once every millisecond. Use of the 1.023 MHz gold code sequence from four orbiting GPS satellites enables the terrestrial position of an Earth receiver to be determined to an approximate accuracy of within 60 to 300 meters.

The second mode of modulation in the NAVSTAR GPS is commonly referred to as the "precise" or "protected" (P) mode. In the P mode, the pseudorandom code has a chip rate of 10.23 MHz. Moreover, the P mode sequences are extremely long, so that the sequences repeat no more than once every 267 days. As a result, the terrestrial position of any Earth receiver can be determined to within an approximate accuracy of 16 to 30 meters.

However, the P mode sequences are classified and are not made publicly available by the United States government. In other words, the P mode is intended for use only by Earth receivers authorized by the United States government.

In order for the Earth receivers to differentiate the various C/A signals from the different orbiting GPS satellites, the Earth receivers usually include a plurality of different gold code sources for locally generating gold code sequences. Each locally-derived gold code sequence corresponds with each unique gold code sequence from each of the GPS satellites.

The locally-derived gold code sequences and the transmitted gold code sequences are cross correlated with each other over gold code sequence intervals of one millisecond. The phase of the locally-derived gold code sequences vary on a chip-by-chip basis, and then within a chip, until the maximum cross correlation function is obtained. Because the cross correlation for two gold code sequences having a length of 1,023 bits is approximately 16 times as great as the cross correlation function of any of the other combinations of gold code sequences, it is relatively easy to lock the locally derived gold code sequence onto the same gold code sequence that was transmitted by one of the GPS satellites.

The gold code sequences from at least four of the GPS satellites in the field of view of an Earth receiver are separated in this manner by using a single channel that is sequentially responsive to each of the locally-derived gold code sequences, or alternatively, by using parallel channels that are simultaneously responsive to the different gold code sequences. After four locally-derived gold code sequences are locked in phase with the gold code sequences received from four GPS satellites in the field of view of the Earth receiver, the relative position of the Earth receiver can be determined to an accuracy of approximately 60 to 300 meters.

The foregoing approximate accuracy of the NAVSTAR GPS is affected by (1) the number of GPS satellites transmitting signals to which the Earth receiver is effectively responsive, (2) the variable amplitudes of the received signals, and (3) the magnitude of the cross correlation peaks between the received signals from the different GPS satellites.

Because multiple PRN signals are received simultaneously at the Earth receiver, a common time interval exists wherein some of the codes can conflict. In other words, the codes cause a degradation in measurements of the time of arrival of each received PRN because of the cross correlations between conflicting received signals.

The time of arrival measurement for each PRN signal is made by determining the time of a peak amplitude of a cross correlation between the gold code sequence of the received PRN signal and the locally- derived PRN signal. When a locally-derived PRN signal is superimposed over a received PRN signal thereby increasing the averaging time of their cross correlation, the average noise contribution decreases. However, because the cross correlation errors between the received PRN signals are periodic, increasing the averaging time also results in increases to both the error signal and the cross correlation value between the received PRN's alike. Consequently, errors relating to the time of arrival of PRN signals are not reduced by cross correlation.

In addition to the GPS, it is known in the conventional art to use inertial systems in navigation systems to obtain position estimates of vehicles. Such an inertial reference unit (IRU) obtains specific-force measurements from accelerometers in a reference coordinate frame which is stabilized by gyroscopes, or gyros. An IRU can be of several types, including for example, laser, mechanical, or fiber optic. In an unaided navigation system using an IRU, the specific force (corrected for the effects of the Earth's gravity) as measured by an accelerometer is integrated into a navigation mathematical equation to produce the vehicle's position and velocity.

The instrument measurements of the IRU may be specified in a different rectangular coordinate frame than the reference navigation frame, depending on the platform implementation. The most commonly used reference navigation frame for near Earth navigation is the local-level frame (east-north-vertical). Several gimballed platform implementations exist with the forgoing reference navigation frame.

In a gimballed, local level-north seeking IRU, the gyroscopes and accelerometers are mounted on a platform which is torqued to maintain the platform level and azimuth pointing to the north. The platform is the reference plane. In contrast, in a gimballed, local-level azimuth-wander IRU, the platform is maintained level, but is not torqued about the vertical axis.

Furthermore, in a strap-down IRU, the gyroscopes and the accelerometers are directly mounted on the vehicle body. They measure the linear and angular motion of the vehicle relative to inertial space. The motion is expressed in vehicle coordinates. Therefore, in a strap-down IRU, it is necessary to first compute the altitude of the vehicle to the referenced navigation frame. Then, the computed altitude is used to transform the accelerometer measurements into the reference frame. After the accelerometer data of a strap-down IRU has been extrapolated into the reference frame, the solution of the navigation equations mentioned previously is identical in both the gimballed IRU and the strap-down IRU.

In the strap-down IRU, the altitude computations, which are required to resolve accelerometer measurements, are usually carried out at a high rate. The computations suffer from numerical errors because of the limited computer byte size and throughput availability. These computation errors depend on the frequency response of the sensor loop, data rate, and resolution and magnitude of the sensor output at the sampling time.

However, significant benefits arise from using the strap-down IRU, rather than the gimballed IRU. The strap-down IRUs are less costly. Moreover, the strap-down IRUs are generally smaller in physical size. Thus, the potential to realize size and cost savings in IRUS can make strap-down IRUs attractive for both military and commercial applications.

The performance of navigation systems using IRUs is primarily limited by errors contributed by the various constituent sensors within the IRUs. Gyroscopes drift. Accelerometers have inherent biases. Further, errors are contributed from improper scale factors and improper IRU alignment angles. Typically, the preceding errors cause inaccuracies in the estimates of vehicle positions, velocity, and altitude, which accumulate over time as a vehicle mission progresses. To some extent, the errors are dependent on user dynamics.

If a very accurate navigation system is required for a vehicle, high precision gyroscopes and accelerometers can be utilized to satisfy that need. However, such high precision equipment increases the complexity and costs of the vehicle.

Proceedings of PR'88, the computer society conference on vision and pattern recognition, 5-9 June 1988, Ann Arbour, US, pages 826 to 831; An Expert Vision System For Autonomous Land Vehicle Road Following, discloses a method of road edge detection.

EP-A-0181012 discloses a vehicle position estimating system combining GPS and inertial navigation systems. IEEE Position Location and Navigation Symposium, 4-7 Nov 1986, discloses an inertial navigation system with GPS comparison.

DE-A-3310111 discloses a navigation system with drift compensation. US-A-3630079 discloses a navigation system utilizing multiple sensors and error correction.

According to the present invention, there is a computer based method, for use with a vehicle, for projecting road edges of a road ahead of the vehicle in an image plane, which computer based method comprises the steps of:
calculating edge points of the road from stored road data;
projecting the edge points to an image plane;
determining a left edge point and a right edge point of a scan line of range data, which points correspond to left and right edges of the road; and detecting for at least one of an obstacle or a discontinuity between the left edge point and the right edge point.

According to the present invention, there is provided a computer based system, for use with a vehicle, for projecting road edges of a road ahead of the vehicle in an image plane, which computer based system comprises:
means for calculating edge points of the road (3312) from stored road data;
means for projecting the edge points to an image plane;
means for determining a left edge point and a right edge point of a scan line of range data, which points correspond to left and right edges of the road; and
means for detecting at least one of an obstacle or discontinuity between the left edge point and the right edge point.

The present invention can be used to aid any navigation system for autonomous vehicles. The autonomous vehicles can be stationary or moving. Moreover, the autonomous vehicles can be at or near the Earth's surface. In other words, the present invention provides for highly accurate and fast tracking of any terrestrial vehicle. It provides both apparatuses and methods, which allow for a superior positioning capability and, consequently, a flexible autonomous navigational capability.

Further features and advantages of the present invention will become apparent to one of skill in the art upon examination of the following drawings and detailed description. It is intended that any additional features and advantages be incorporated herein.

The present invention as defined in the claims can be better understood with reference to the text and to the following drawings.
Figure 1 illustrates a block diagram of the preferred embodiment of the present invention;
Figure 1A is a block diagram 100A of the operational GPS satellites in the NAVSTAR GPS;

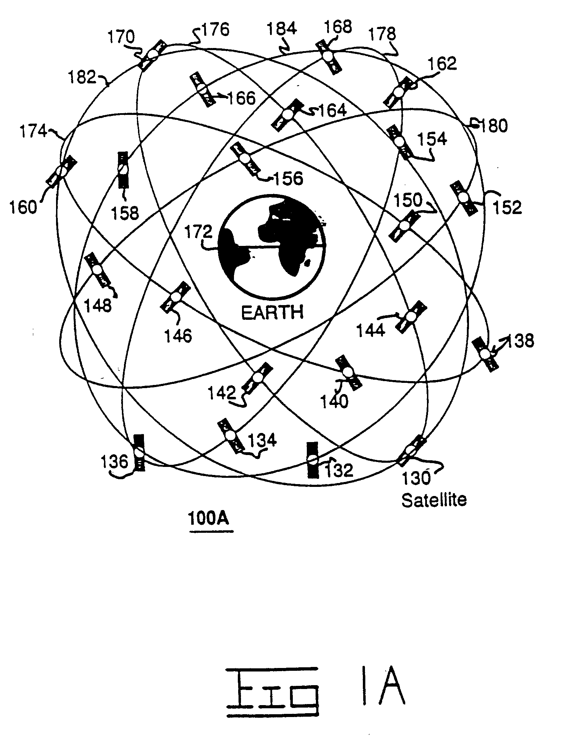

Figure 2 illustrates four, simultaneous, navigation equations regarding four GPS satellites of the NAVSTAR GPS;

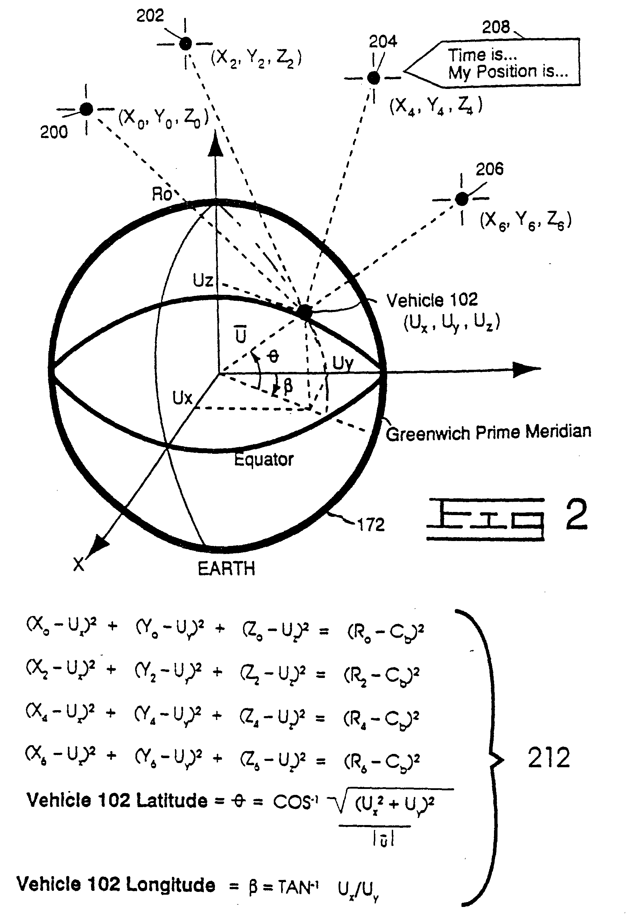

Figure 3 is a block diagram of a typical autonomous work site;

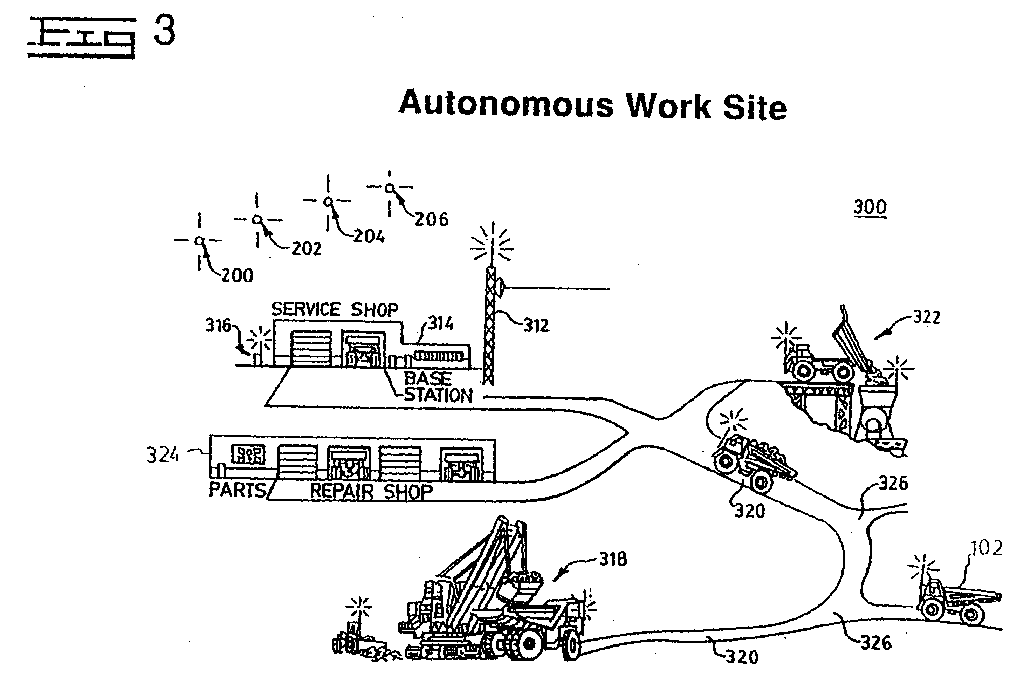

Figure 4 is a block diagram of the interrelationships between a navigator, a vehicle VPS architecture, and vehicle controls of the present invention;

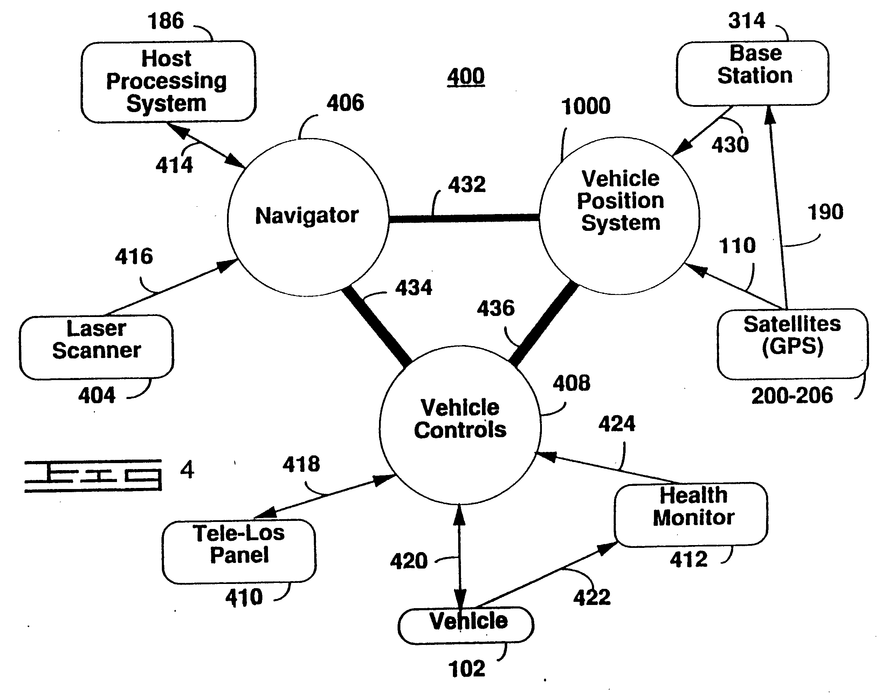

Figure 5 is a block diagram illustrating elements in an autonomous control system;

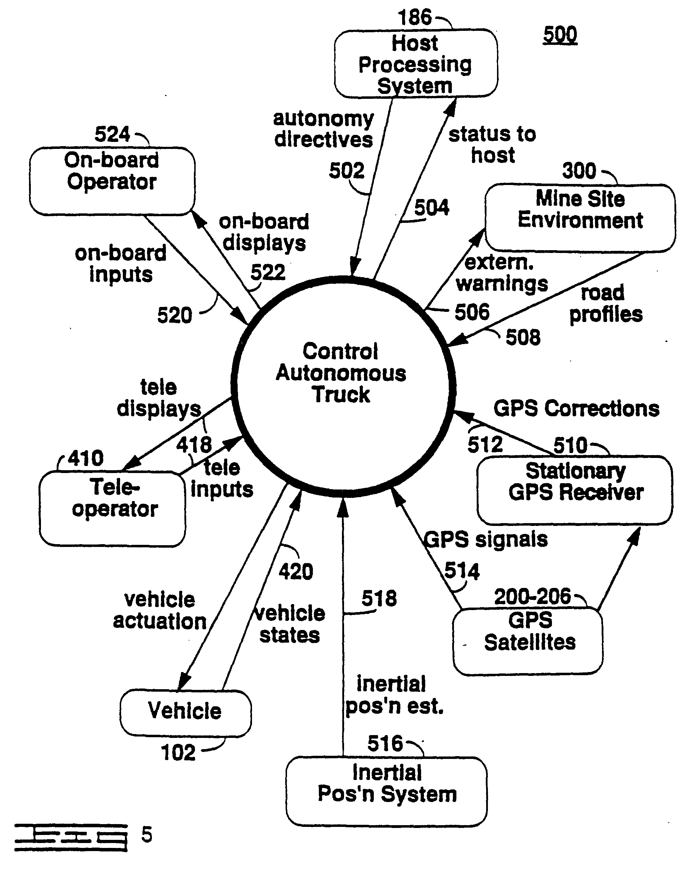

Figure 6 is a block diagram of the operation of a GPS;
Fig. 7A is an illustration of a vehicle mounted scanner 404;
Fig. 7B is an illustration of an autonomous vehicle scanning for an obstacle;

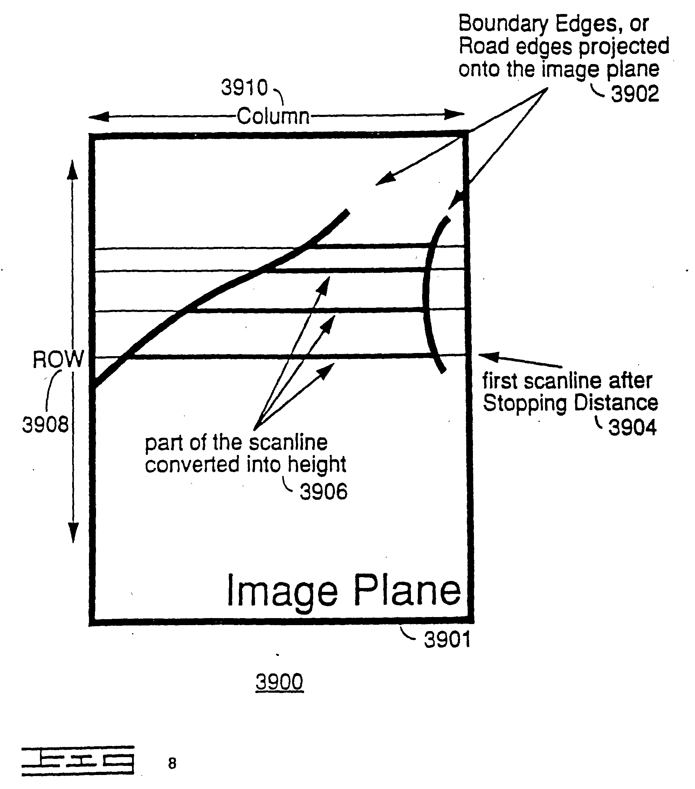

Fig. 8 is a diagram of selected scan lines in a laser scanner system;

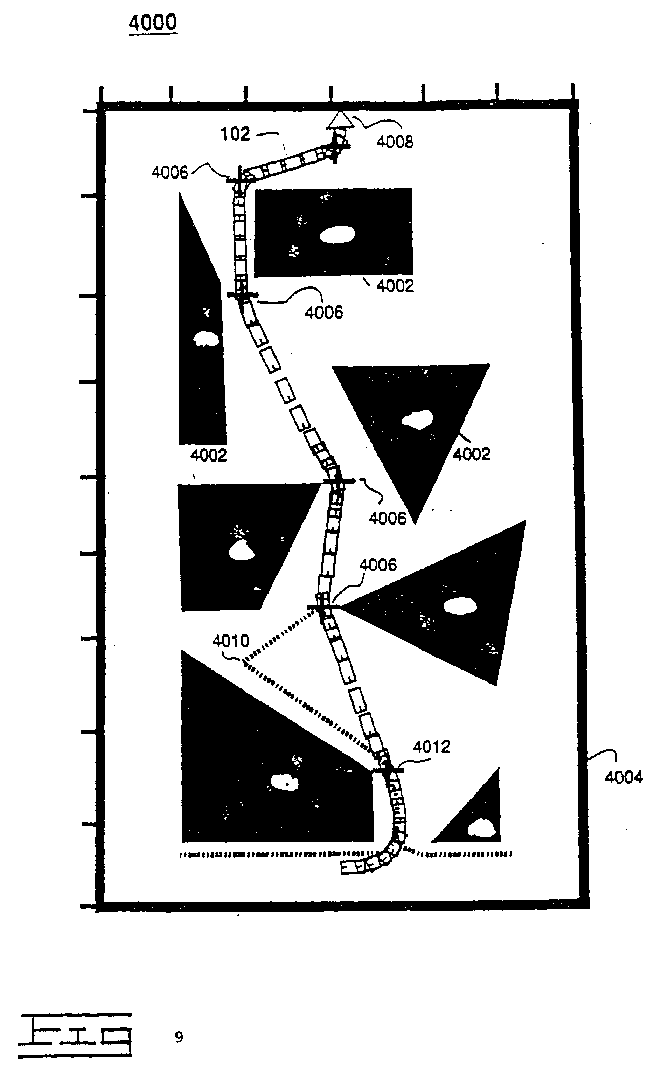

Fig. 9 is a diagram of an autonomous vehicle avoiding obstacles;
Fig. 10 is a diagram of obstacle; and
Fig. 11 is a block diagram of a laser scanner system used for obstacle detection.

### I. Definitions

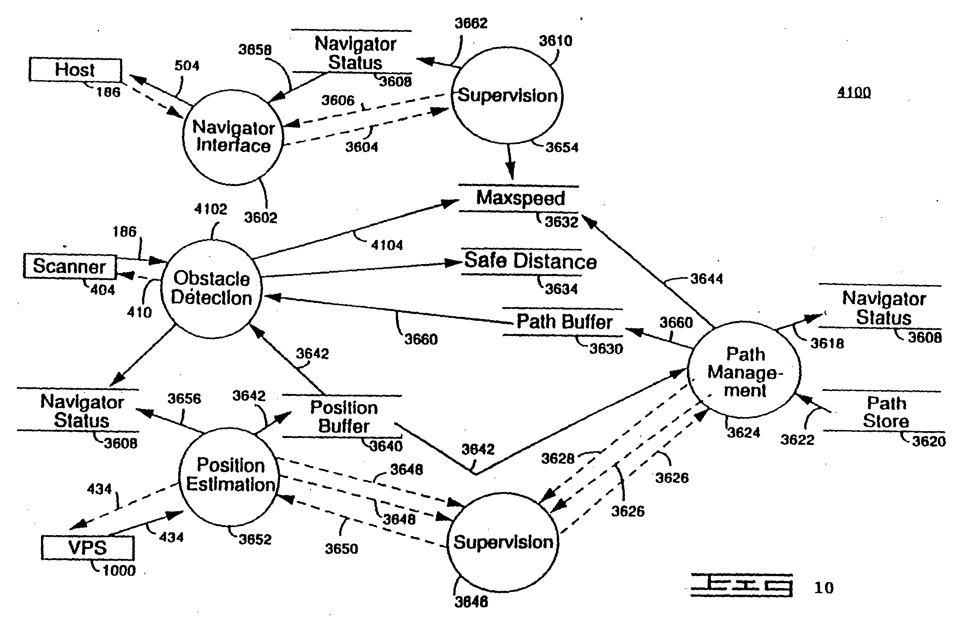

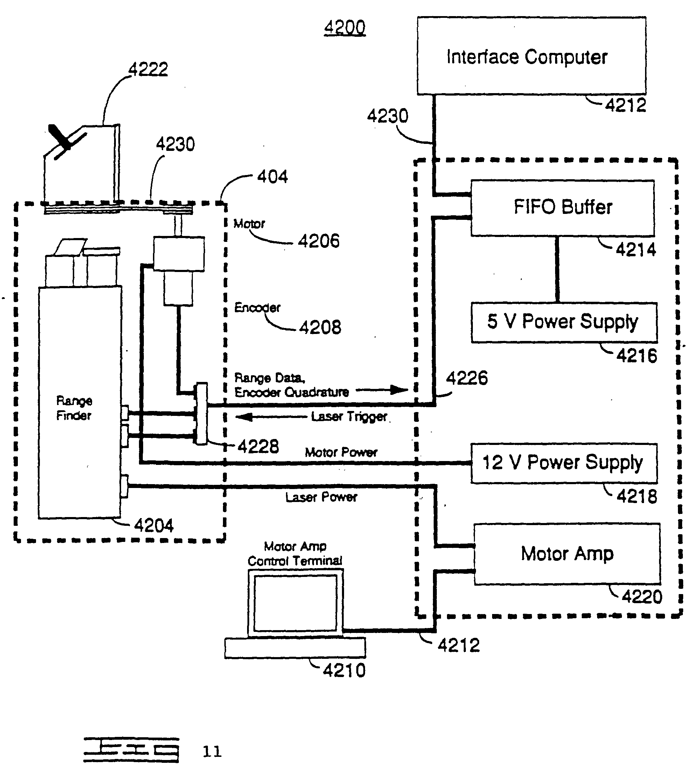

**(1)** "Absolute position" in the context of this document refers to a position relative to the center of the Earth. Generally, an absolute position will be in reference to a vehicle or the base station, both on or near the Earth's surface. First, second, and third position estimates are all absolute positions in the preferred embodiment of the present invention.
**(2)** "Actual pseudorange" means an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Actual pseudoranges are approximated by first measuring the propagation time delays between transmission and reception of the electromagnetic signals emanated from the GPS satellites and/or pseudolites. Actual pseudoranges can be readily calculated by multiplying the calculated time delays by the speed of light, or 2.9979245898 * 10⁸ m/s.
**(3)** "Anti-selective availability" refers to a method/technique/process for detecting and compensating for corrupted GPS data in the coarse/acquisition (C/A) mode of modulation.
**(4)** "Autonomous" is used in this document in its conventional sense. It indicates operation which is either completely automatic or substantially automatic or without significant human involvement in the operation. Generally, an autonomous vehicle means an unmanned vehicle in operation, or a vehicle in operation without a human pilot or co-pilot. However, an autonomous vehicle may be driven or otherwise operated automatically and also have a human passenger(s) as well.
**(5)** "Base correlator bias" means a spatial bias derived in accord with the flowchart 1700A of Figure 17A.
**(6)** "Base correlator bias technique" means a method/process for computing base correlator biases.
**(7)** "Base estimated position" or "BEP" refers to the relative position of the base station with respect to a vehicle. The BEP is used in the base correlator bias technique of Part II.F.2.d. of this document.
**(8)** "Base known position" or "BKP" is the absolute position of the base station (used as a reference point) which is known. The BKP can be an estimate itself, derived from any accurate positioning system. The BKP is assumed to be a more accurate estimate of the base station's absolute position than any other position estimate.
**(9)** "Base position estimate" means the absolute position estimate of the base station as derived from the GPS processing system within the host processing system. The base position estimate is substantially similar to the first position estimate derived by the GPS processing system at the vehicle. The base position estimate is computed in the base residuals bias technique at Part II.F.2.c. of this document.
**(10)** "Base residuals bias" means a spatial bias which is the effective difference in the base known position (BKP) of the base station and the position estimate of the base station which is computed by the host processing system.
**(11)** "Base residuals bias technique" refers to a method for deriving base residuals biases.
**(12)** "Bias" refers to a differential between two measurements, usually position estimates (spatial bias) or clock rates (clock bias). Because one measurement is usually known to be more accurate than another, the bias is often times referred to as an "error."
**(13)** "Clock bias" means the difference in the clock times between (1) the transmission circuitry of GPS satellites and/or pseudolites and (2) the reception circuitry of an Earth receiver. When using a clock bias in the computation of a spatial bias, the clock bias is multiplied by the speed of light, or 2.998 * 10⁸ meters per second. Consequently, the clock bias is transformed into units of length.
**(14)** "Constellation" refers to a group comprised of GPS satellites and/or pseudolites whose signals are utilized to derive an absolute position estimate of a point on or near the Earth's surface. See "optimal constellation" below.
**(15)** "Constellation effects method" means a technique or process by which an optimal constellation of GPS satellites is selected from a larger group of GPS satellites in view of a vehicle.
**(16)** "Data radio" refers to a transmitter, receiver, transceiver, or any combination thereof, for communicating data at radio frequencies (RF).
**(17)** "Earth receiver" refers to any apparatus or device, or any part thereof, which receives and processes signals from a GPS and/or pseudolites. Earth receivers may be situated on or near the Earth's surface. Moreover, earth receivers may take the form of, for example, a vehicle or a base station.
**(18)** "Estimated pseudorange" refers to an approximation of the distance between (1) a reference point and (2) a source of a terrestrial position determination system. In this document, actual pseudoranges usually refers to an approximation of the distance between (1) an Earth receiver and (2) GPS satellites and/or pseudolites. Estimated pseudoranges are computed from GPS data encoded on the electromagnetic signals being transmitted from the GPS satellites and/or the pseudolites. Almanac equations for computing estimated pseudoranges from the GPS data of the NAVSTAR GPS are publicly available.
**(19)** "First position estimate" or "FPE" or "FPE(i)" refers to an estimated absolute position of any vehicle which is outputted, in any form, from the GPS. The first position estimate and a second position estimate are independently derived in the present invention. Subsequently, these estimates are combined and filtered to derive a third position estimate. Consequently, the accuracy of the first position estimate affects the accuracy of the third position estimate.
**(20)** "GLONASS GPS" refers to the GPS which has been designed and which is currently being deployed by the U.S.S.R.
**(21)** "Global positioning system" or "GPS" is a type of terrestrial position determination system. In a GPS, a number of satellites are placed in orbit around the planet Earth. The GPS satellites are designed to transmit electromagnetic signals. From these electromagnetic signals, the absolute, terrestrial position (position with respect to the Earth's center) of any receiver at or near the Earth's surface can ultimately be determined. The U.S. government has designated its GPS the "NAVSTAR." The government of the U.S.S.R. has designated its GPS the "GLONASS."
**(22)** "GPS data" means all data encoded on signals transmitted from GPS satellites of a GPS. GPS data includes, for example, ephemeris data and time data.
**(23)** "GPS processing system" refers to the system of the present invention for receiving signals from a terrestrial position determination system and for deriving first position estimates of vehicles from the received signals. In the preferred embodiment, the GPS processing system receives electromagnetic signals from GPS satellites of a GPS and/or from pseudolites.
**(24)** "Host processing system" refers to a computer system which is operating at the base station for performing methods and techniques which increase the accuracy of position estimates of vehicles. Data derived from these methods and techniques is transmitted to vehicles so that the vehicles can use the data when computing first, second, and third position estimates. In the preferred embodiment, the architecture/hardware of the host processing system is substantially similar to the architecture/hardware of the VPS.
**(25)** "Inertial reference unit" or "IRU" refers to a system, usually on-board a vehicle, for aiding in the derivation of a second position estimate of the vehicle. An IRU obtains specific-force measurements from accelerometers in a reference coordinate frame which is stabilized by gyroscopes, or gyros. An IRU can be of a laser type or a mechanical type. In an unaided navigation system using an IRU, the specific force (corrected for the effects of the Earth's gravity) as measured by an accelerometer is integrated into a navigation mathematical equation to produce the vehicle's position and velocity. In the preferred embodiment, the IRU is part of the MPS.
**(26)** "Kalman filter" is used in its conventional sense. It refers to a software program for filtering out noise or errors in data. In the preferred embodiment, a GPS Kalman filter is utilized to filter out noise or errors in the GPS processing system in order to enhance the accuracy of first position estimates. Also, a VPS Kalman filter is utilized to filter out noise in the VPS in order to enhance the accuracy of second position estimates.
**(27)** "Motion positioning system" or "MPS" means a system comprising at least an IRU and a vehicle odometer. In the preferred embodiment, the MPS derives the second position estimate of any vehicle on or near the Earth's surface. Moreover, an MPS need not be present at the base station due to its stationary nature.
**(28)** "Optimal constellation" means a satellite constellation in which the relative positions of the GPS satellites in space affords superior triangulation capabilities in order to derive the most accurate estimate of a point on or near the Earth's surface.
**(29)** "Original bias" means a spatial bias calculated by subtracting both estimated pseudoranges and clock biases (in units of length) from actual pseudoranges. Clock biases are transformed into units of length by multiplying them by the speed of light, or 2.9979245898 * 10⁸ meters per second.
**(30)** "Original bias technique" is a method for computing original biases.
**(31)** "NAVSTAR GPS" means the GPS which has been designed and which is currently being deployed by the U.S. government.
**(32)** "Navigation system" refers to any systems and/or methods for guiding any vehicle on or near the Earth's surface. The navigation system can be on-board a vehicle. The VPS of the present invention can supply the navigation system of the vehicle with a very accurate, third position estimate of the vehicle so that the navigation system can thereby precisely guide the vehicle.
**(33)** "Parabolic bias" is a spatial bias computed by constructing parabolic models for the actual pseudoranges of each observed GPS satellite and extrapolating values from the parabolic models. In the preferred embodiment, the parabolic biases are the actual pseudoranges minus the value extrapolated from the constructed parabolic models and minus the clock biases (in units of length, via multiplying by the speed of light).
**(34)** "Parabolic bias technique" is a method for computing parabolic biases for each of the GPS satellites that are utilized.
**(35)** "Preferred embodiment" refers to the best mode of implementing the present invention. The preferred embodiment is merely exemplary. The present invention should not be interpreted as being limited by the preferred embodiment.
**(36)** "Pseudolite" refers to a radiating system on or near the Earth's surface for emulating a GPS satellite. In the preferred embodiment, electromagnetic signals, similar to those from GPS satellites, are transmitted from land-based pseudolites. One or more pseudolites can 92 be used to emulate GPS satellites to enhance the computation of first position estimates.
**(37)** "Pseudolite data" means all data encoded on signals received from pseudolites. Pseudolite data resembles GPS data in many respects and includes similar information.
**(38)** "Pseudorange" means the distance between a source of a terrestrial position determination system and a point on or near the Earth's surface. In the preferred embodiment, sources can be GPS satellites and/or pseudolites. The terrestrial position determination system can be a GPS used with pseudolites, if any. Further, the point on or near the Earth's surface can be the base station and/or vehicles.
**(39)** "Satellite position predictor" is a method for determining the future positions of GPS satellites. The method allows for the selection of optimal constellations ahead of time.
**(40)** "Second position estimate" or "SPE" refers to an estimated absolute position of any vehicle which is outputted, in any form, from the MPS. Second position estimates include at least position information from an IRU. The second position estimate could include position information from a vehicle odometer situated on a vehicle.
**(41)** "Spatial bias" refers to a bias related to approximations of positions in two-dimensional or three-dimensional space. Spatial biases are used to offset a position estimate to enhance the accuracy of the position estimate. Spatial biases can be computed by a number of different methods of the present invention. Included in these methods are, for example, an original bias technique, a parabolic bias technique, a base residuals bias technique, and a base correlator bias technique.
**(42)** "System" is used for shorthand purposes to mean apparatus, method, or a combination of both apparatus and method. Moreover, it could include software, hardware, or a combination of hardware and software.
**(43)** "Position determination system" means any system having sources which emanate signals which can be used by a receiver of the signals to estimate the relative distance between the sources and the receiver. The signals may be in the form of, for example, electromagnetic waves, percussion waves, and/or sound waves.
**(44)** "Terrestrial position determination system" means any position determination system which can be used to ultimately estimate the terrestrial position of an Earth receiver. The signals may be in the form of, for example, electromagnetic waves, percussion waves, and/or sound waves. In the preferred embodiment, the terrestrial position determination system is the NAVSTAR GPS.
**(45)** "Third position estimate" or "TPE" refers an estimated absolute position of any vehicle that is outputted, in any form, from the VPS. Third position estimates are more accurate position estimates of vehicle positions than the first and second position estimates. Third position are derived by the VPS processing system from the first and second position estimates.
**(46)** "Vehicle" means any carrier for the transportation of physical things. Vehicles may take the form of mining trucks, construction trucks, farm tractors, automobiles, ships, boats, trains, balloons, missiles, or aircraft. In the preferred embodiment, a Caterpillar Inc. 785 off-highway truck is utilized.
**(47)** "Vehicle positioning system" or "VPS" refers to the system of the present invention for deriving position estimates of any vehicle. The position estimates from the VPS are extremely accurate and can be used by a navigation system on any vehicle to accurately guide the vehicle. In the preferred embodiment, position estimates from the VPS are referred to as third position estimates.
**(48)** "VPS processing system" means the processing system of the VPS. The VPS processing system derives third position estimates from the first and second position estimates. The architecture is depicted in Figures 10 and 11.
**(49)** "Weighted combiner" refers to a particular software program which processes data. Inputted data is assigned a predetermined weighing factor based on the estimated accuracy of the data and the technique used to gather the data. For example, in the preferred embodiment, the first position estimate of the GPS signal 716 is weighted heavier than the second position estimate of the IRU signal 910 because the former is inherently more accurate. Furthermore, the velocity measured by the IRU can be weighted heavier than the velocity measured by the GPS processing system because the former is more accurate. In the preferred embodiment, the velocity measured by the GPS processing system is not used at all, but could be used in other implementations.
**(50)** "Weighted path history technique" is a method or process for increasing the accuracy of first position estimates outputted from the GPS processing system. The technique uses previous first position estimates to derive a vehicle path model for testing the validity of future first position estimates. Use of the weighted path history technique results in a reduction to wandering of first position estimates and in enhanced immunities to spurious position computations.

### II. General Overview

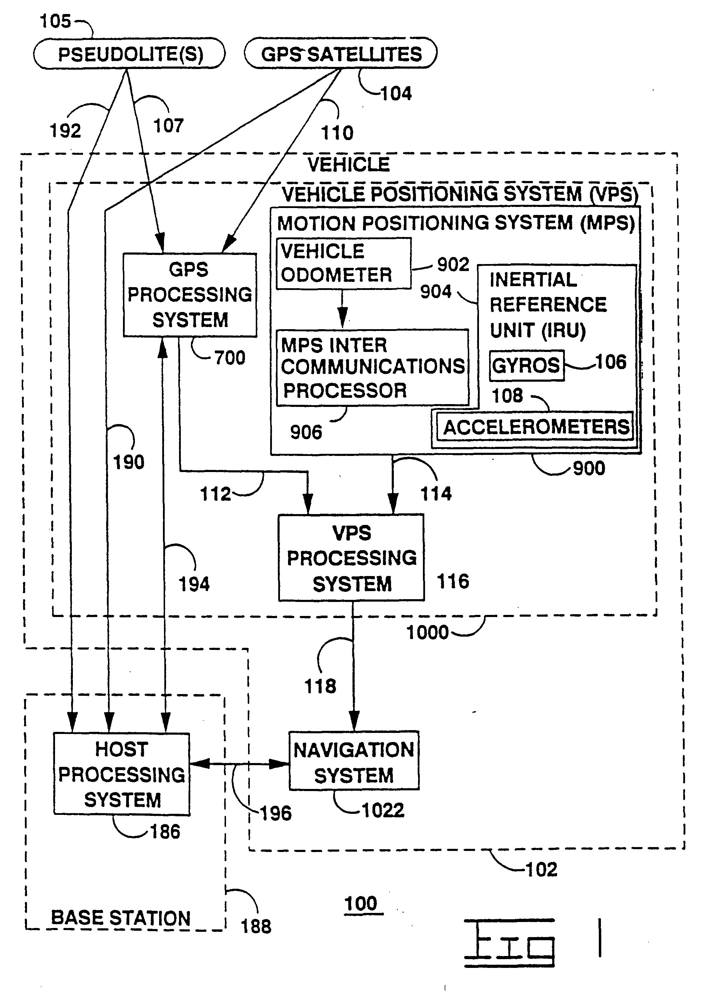

Figure 1 illustrates a high level block diagram 100 of the preferred embodiment of the present invention. To provide for the accurate autonomous operation of a vehicle 102 on or near the Earth's surface, the present invention includes both a vehicle positioning system (VPS) 1000 and a navigation system 1022. Both of these systems include apparatus, methods, and techniques which, when integrated together, provide for highly accurate control of unmanned vehicles.

### A. Vehicle Positioning System (VPS)

The task of guiding the autonomous vehicle 102 along a prescribed path requires, among other things, an accurate estimate of the vehicle's current position relative to some reference point. Once the current position is known, the vehicle 102 can be commanded to proceed to its next destination.

Using the VPS 1000 of the present invention, position estimates of the vehicle 102 can be determined with extreme preciseness. The VPS 1000 receives GPS data from GPS satellites 104 of a GPS, such as the NAVSTAR GPS or the GLONASS GPS.

In the preferred embodiment, the NAVSTAR GPS is utilized. Figure 1A illustrates the NAVSTAR GPS. GPS satellites 130-168 travel around the Earth 172 in six orbits 174-184.

Referring back to Figure 1, the VPS 1000 also may receive pseudolite data from a pseudolite(s) 105. The term "pseudolite" in the context of this document means a radiating device on or near the Earth's surface for emulating a GPS satellite.

From the GPS data and/or the pseudolite data, the VPS 1000 derives accurate estimates of position of the vehicle 102. The GPS data and/or the pseudolite data is significantly enhanced via numerous inventive techniques and methods of the present invention to enhance the accuracy of vehicle position estimates.

More specifically, the VPS 1000 of the preferred embodiment is a positioning system based on the incorporation of GPS data from the NAVSTAR GPS 104 and from a motion positioning system 900. In the preferred embodiment, the motion positioning system 900 comprises an inertial reference unit (IRU) 904 and/or a vehicle odometer 902. The IRU 904 comprises a laser gyroscope(s) 106 and an accelerometer(s) 108 which can be used to produce position, velocity, roll, pitch and yaw data. The vehicle odometer 902 produces data on the distance travelled by the vehicle 102.

A first position estimate of the vehicle 102 is derived by the GPS processing system 700 from GPS data received from the GPS satellites 104 and from the pseudolite data received from the pseudolite(s) 105. To increase the accuracy of the first position estimate the present invention implements a number of methods discussed in detail below. In addition, a second position estimate is derived by the MPS intercommunications processor 906 of the motion positioning system 900, which comprises the IRU 904 and/or the vehicle odometer 902.

As shown by respective arrows 112 and 114, the first position estimate and the second position estimate are then combined and filtered by a VPS processing system 116. The result as shown by an output arrow 118 is a more accurate, third position estimate.

### B. Navigation System

The navigation system 1022 receives the third position estimate from the VPS 1000. The navigation system 1022 uses the precise, third position estimate to accurately navigate the vehicle 102. A primary purpose of the navigation system 1022 is to guide the vehicle 102 between points along pre-established or dynamically-generated paths.

In the preferred embodiment, the navigation system 1022 is situated on the vehicle 102 itself. In other words, it is essentially an "on-board" system. Moreover, the navigation system 1022 may be designed to be retrofitted into the vehicle 102.

So that the navigation system 1022 can guide the vehicle 102 to follow the pre-established or dynamically-generated paths, various models or conceptual representations are generated and utilized. For example, lines and arcs may be used to establish vehicle paths between objective points. Mathematical B-splines or clothoid curves may be used to model the actual path where the vehicle 102 is to navigate. These mathematical curves will be discussed in detail later in this document.

Using the above modelling or representational techniques provides for enhanced data communications, storage, and handling of the vehicle 102. The techniques further allow for simplification of supervisory tasks by providing a hierarchy of control and communication. The higher that a level of control exists on the hierarchical control scheme, the simpler the task and the more compact the commands.

The navigation system 1022 further provides for controlling the vehicle's mechanical systems, such as brakes, steering, and engine and transmission, to effect the necessary physical acts required to move, stop, and steer the vehicle 102.

The navigation system 1022 also checks the actual position of the vehicle 102 against the desired position to correct vehicle control in accord with the desired position. The navigation system 1022 may run multi-state models to enhance this checking capability. The navigation system 1022 also checks for errors or failures in the system itself and vehicle components. If errors or failures are detected, the navigation system 1022 can provide for fail-safe shutdown by bringing the vehicle 102 to a complete stop.

The navigation system 1022 further provides for different modes of controlling the vehicle 102. These include (1) a fully autonomous mode, where navigation of the vehicle 102 is automatically handled by the navigation system 1022; (2) a tele or remote control mode, where a remote human operator (not shown) may control the direction and motion, and so on, of the vehicle 102; and (3) a manual mode, where a human operator sitting in the vehicle 102 can take control of the vehicle 102 and drive it manually.

In the autonomous mode, obstacle detection is critical because if the vehicle 102 is not under control, then it could cause great damage to property and great injury to life. The navigation system 1022 can efficiently detect obstacles. Boulders, animals, people, trees, or other obstructions may enter the path of the vehicle 102 unexpectedly. The navigation system 102 is capable of detecting these obstacles, either stopping or plotting a path around the obstruction, and returning the vehicle 102 to its original route when the route is deemed safe.

Accurately tracking the desired route is another function of the navigation system 1022. The functioning and architecture of the navigation system 1022 has been designed for real time tracking of vehicle paths at speeds of up to approximately 30 miles per hour (mph).

### C. Base Station

The present invention can comprise a host processing system 186 at a base station 188. The host processing system 186 performs functions for both the VPS 1000 and the navigation system 1022.

With respect to the VPS 1000, the host processing system 186 receives GPS data and/or pseudolite data, as shown by respective arrows 190 and 192. In effect, the host processing system 186 as well as the base station 188 can serve as a known reference point to improve the accuracy of vehicle position estimates as discussed in detail below.

The host processing system 186 implements a number of methods for increasing the accuracy of vehicle position estimates. The satellite position predictor method 1800 (Part II.G.) discussed above is also implemented by the host processing system 186. The host processing system 186 will recognize the same satellite constellation that is observed by the vehicle 102.

Calculations are performed on the GPS data and/or pseudolite data to derive biases. The term "bias" in the context of this document refers to a differential between two measurements, usually position estimates (spatial bias) or clock rates (clock bias). Because one measurement is usually known to be more accurate than another, the bias is often times referred to as an "error."

To compute spatial biases, the host processing system 186 implements a number of methods. Included in these methods are, for example, an original bias technique parabolic bias technique base residuals bias technique 1700 (Part II.F.2.c.), and a base correlator bias technique 1700A (Part II.F.2.d.).

The foregoing differential correction techniques compensate for data errors. In other words, the biases computed at the host processing system 186 are indicative of data errors. As shown by an arrow 194, the biases are transmitted to the GPS processing system 700 of the vehicle 102. The GPS processing system 700 uses these biases to eliminate errors in vehicle position estimates.

The host processing system 186 further provides functions relating to the navigation system 1022 of the present invention. The host processing system 186 serves as the highest level of control of the navigation system 1022, as indicated by an arrow 196. It handles scheduling and dispatching of the vehicle 102 with much the same results as a human dispatcher would achieve. Consequently, the host processing system 186 can thereby determine the work cycle of the vehicle 102.

The host processing system 186 commands the vehicle 102 to proceed from a current position to a future position via a specified route, so that the vehicle 102 may accomplish its work goals. The host processing system 186 can specify the vehicle routes by name, rather than by listing each point along the route, as is the case conventionally. Accordingly, the vehicle's on-board navigation system 1022 looks up the named vehicle route and translates the named vehicle route into sets of nodes and segments along the named vehicle route.

### B. OBSTACLE HANDLING

### 1. INTRODUCTION

Obstacle handling involves at least three major functions: detection of obstacles 4002, avoidance of obstacles 4002, and returning to path 3312. The returning to path function is similar to path generation and tracking, as described above.

In addition to path tracking (following), successful navigation of vehicle 102 requires that vehicle 102 be able to detect obstacles 4002 in its path, thus allowing the vehicle to stop or otherwise avoid such an obstacle before a collision occurs.

In one embodiment of the present invention, a single line infra-red laser scanner 404 (See Figure 38) is used in a configuration where the scan is horizontal (not shown). The scan line 3810 does not contact the ground, so any discontinuities in the range data can be attributed to objects 4002 in the environment.

Since a reference path 3312 is available and the vehicle position is known relative to the reference path, only the range data and a region bounding the reference path 3312 is processed for threatening objects 4002. Objects outside of this region, or boundary zone, are ignored. The width of the boundary zone (not shown) is equal to the vehicle width plus some selected safety buffer to allow for tracking and positioning errors. This method is limited in its usefulness and is referred to as "clearance checking."

### 2. DETECTION OF OBSTACLES

### a. CLEARANCE CHECKING

In the simplest case of the present invention, the laser 404 may be used in a single line scan mode with successive range measurements being made at regular angular intervals as the laser scans over the field of view. Again for simplicity, these scans can commence at regular time intervals. The term "clearance checking" has been used to describe this method. In this version of the present invention, the method has been limited to processing only two dimensional data.

This type of obstacle method is limited to checking to see if the path 3312 is clear using a single line scan mode with successive range measurements being made at regular angular intervals as the scanner 404 scans over the field of view. It does not include any methods to establish the existence of any obstacle 4002 or to create a path around it if the path is not clear. This type of method is not deemed to be a particularly useful obstacle detection method, except in very rigidly controlled environments, such as on a factory floor.

### b. FILTERING AND EDGE DETECTION SCHEME

A second obstacle detection embodiment of the present invention uses a multiple-line scanner 3804 (See Figure 38), whose scan 3810 contacts the ground at some distance in front of the vehicle 102. Since the scan line contacts the ground, discontinuities in range data can no longer be attributed to threatening objects 4002. For example, profiles from natural objects such as hills and banked or crowned roads can cause discontinuities in range data. This technique of the present invention can discern discontinuities in range data between threatening objects 4002 and natural objects (not shown).

In this embodiment of the present invention, a filtering scheme is used to decrease the amount of data processed and is independent of the scanner configuration used. The edges of the boundary zone are found by transferring the range data to an image plane representation 3900 (See Figure 39), where each range value is located by a row number 3908 and a column number 3910 (a matrix representation).

Processing load is minimized by selecting a relatively small number of the scan lines available in a range image representation 3900. The scan lines are selected by vehicle speed, and are concentrated at, and beyond, the vehicle stopping distance. The selected scan lines from successive frames of data can overlap.

In this method, if the vehicle 102 is moving fast, the selected scan lines 3906 are far in front of the vehicle (near the top of the range image representation 3900). In contrast, when the vehicle is traveling slowly, the selective scan lines 3906 are closer to the vehicle (near the bottom of the range image representation 3900).

Each scan line is made up of many pixels of data. Each pixel has two parameters associated with it. First, the actual value of the pixel is the range value returned by the scanner 3804. Second, the location of the pixel on the scan line gives an indication of the angle, relative to the vehicle centerline, at which the range value was recorded. This corresponds to a cylindrical coordinate frame (R,THETA,Z) description.

Given the cylindrical description and the known scanner location with respect to the vehicle 102, the range values can be converted to a Cartesian coordinate (X,Y,Z) system. The result is a road profile description which can be used by a novel filtering scheme to determine if threatening objects 4002 are present in the vehicle path 3812, while ignoring effects due to natural hills and valleys in a typical roadway.

After the scanner data is converted to Cartesian coordinates, the data is processed to determine which part of the scan is actually on the road 3312 and which part of the scan line is outside of the vehicle path and therefore safely ignored. Given the vehicle position and the width of a boundary (which is equal to the vehicle width plus some safety margin), the coordinates of the boundary on either side of the vehicle path can be determined. The coordinates of the boundary can be compared to the coordinates of each pixel on the current scan line. The pixels which have coordinates outside of the boundary are ignored.

The filtering scheme builds an expectation of the road profile from previously sensed road profiles. This expectation is based on three parameters which were found to adequately describe typical paved roads. These three parameters are:
o road crown: the curvature of the road cross section (perpendicular to the road centerline).
o road bank: the 'tilt' of the road profile (perpendicular to the centerline).
o road height: the height of the road centerline above a reference plane described by the location of the four tires of the vehicle 102.

Expected values of the road crown and the road bank are determined by performing a standard, least-squares Kalman filtering technique on previously sensed scanner data. The Kalman filter basically keeps a type of running average of the two parameters based on the values determined from the previous data.

In accordance with the present invention, the expected road height for a particular scan can be determined through one of two similar methods.

One is to average the road height at each pixel within the current scan line to determine a characteristic height of the scan line in question.

The second method is to filter the road height using the standard Kalman filter similar to that used when determining crown and bank expectations.

These three parameters can be used to determine a second order equation which describes the expected road profile. This expected profile is compared to the actual road profile. Any deviations between the two which exceed a preset threshold value are assumed to be threatening objects.

This scheme of the present invention is viable given the assumption that any detected objects 4002 are small in comparison to the width of the road. Then, when these averaging or least squares methods are used, the effects due to objects are negligible in comparison to natural road data.

This filtering scheme also includes a very simple edge detection method which convolves the selected range data with a simple seven point weighing function.

### c. OBSTACLE EXTRACTION

An additional technique of the present invention processes an entire range image representation 3900 from a multi-line scanner 3804 for objects. This method of the present invention accomplishes three goals:
1. Do not detect obstacles 4002 when none exists,
2. Detect obstacles 4002 when obstacles do exist, and
3. Detect the correct obstacles 4002 when obstacles exist.

Obstacle extraction is obstacle detection through the use of blob extraction. Blob extraction is well known in the art of computer graphics. Obstacles are found by clustering similar pixels into groups, called blobs. The goal of obstacle extraction is to store and process obstacles as units rather than as individual pixels.

The obstacle extraction of the present invention may be done by preforming the following steps in the image plane 3901:
1. Project the vehicle path into the image plane 3901,
2. Transform range data into height data,
3. Fit a curve to the height at the center of the road (this represents the expected road height at each row),
4. Threshold the actual road height against the height expectation, and
5. Extract the obstacles (indicated by differences in actual and expected road heights which exceed the threshold).

### (1) FINDING THE ROAD

In order to process all the available data, the images must be processed at the frame rate of the scanner 3804. For this reason, most of the computations in the obstacle extraction method are done in the image plane 3901. By projecting the path into the image, a large portion of the image can be ignored, and many needless computations avoided.

Assuming that the vehicle path 3812 is specified at regular intervals, the current vehicle position can be used to locate the path segment line 3902 in front of the scanner. This path 3812 is transformed from world coordinates into image coordinates by projecting the points corresponding to the road or boundary edges 3902 into the image plane 3901 (see Figure 39).

A cubic spline is used to interpolate between the gaps. Thus, the center and edges of the row 3902 are found for each row 3908 in the image plane 3901. The pixels isolated between the road edges 3902 are converted (cylindrical to Cartesian coordinates) from range to height data. The outlying pixels are discarded and not processed any further.

### (2) MODELING ROAD HEIGHT

Once the center of the road is known for every row 3908 in the image plane 3901, the height for each of these points can be determined. A third order least squares curve is fit to these data.

This has the effect of modeling the general trend of the road (up and down hills) as well as filtering out the effects of noise and small objects lying in the center of the road.

### (3) THRESHOLDING

Obstacles may be located by using a height threshold. A straight height threshold would be meaningless since the surrounding terrain is not necessarily flat. Hence, the threshold is referenced against the expected height, as predicted by the third order fit, at the row number 3908 of the given pixel.

In this manner, a hill is not considered an obstacle since the height expectation and the actual height should match very closely. On the other hand, a real obstacle 4002 would barely reflect the expected road height (due to the least squares fit), and therefore is readily found by thresholding. The result of this thresholding is a binary image (not shown) suitable for a "blob extraction." The binary image only indicates where an object is or is not present in the image.

### (4) BLOB EXTRACTION

Blob extraction works by clustering adjacent set pixels (indicating an obstacle 4002 is present) together and treating them as a unit. Two pixels are adjacent if they are either:
1. In the same column 3910 and have consecutive row numbers 3908, or
2. In the same row 3908 and have consecutive column numbers 3910.

By grouping pixels together into blobs, the obstacles 4002 can be treated as a whole unit and are suitable for further processing.

### (5) APPLICATIONS

One way to use extracted blobs is to pipe them as input into another program. For example, the objects 4002 can be parsed into coordinates and used to accumulate a global object map 4004 (See Figure 40). This map 4002 is then passed into another program, and used to do collision avoidance or path planning.

### 3. AVOIDANCE OF OBSTACLES

Once the present invention detects an obstacle 4002 in the path of the vehicle 102 (See Figure 40), it must then avoid a collision with the object. Certain assumptions are made concerning the obstacle avoidance problem:
1. The obstacle environment is populated with obstacles 4002 that can be represented by convex-polygons or convex lines;
2. The navigation methods only have access to the local environment information in the form of a local map representing all of the visible faces of the obstacle from the position of the vehicle 102, which can be obtained from unprocessed laser range data or from data processed through blob-extraction;
3. The vehicle 102 is a conventionally steered type which has constraints on its speed and acceleration and constraints on its steering angle and the rate of change in the steering angle.

To deal with the obstacle avoidance problem, the present invention divides it into two sub-problems.

First, to decide if any obstacles are in the way, and if so, which side should the vehicle pass on. Then select a sub-goal 4006, which will lead the vehicle 102 around the obstacle 4002, leading towards a higher level goal 4008, which is to get back on the desired path.

Second, once a sub-goal 4006 is selected, make a steering decision which drives the vehicle 102 towards the sub-goal 4006, while steering clear of the obstacle 4002. A sub-goal selection method and a steering decision method of the present invention solve these two sub-problems.

The above enumerated assumptions are managed in the following process:

The obstacle locations are obtained from the laser range scanner 3804 or 404. The range data generated by the scanner 3804 or 404 are processed to produce a list of polygonal faces, modeling the visible portions of the obstacle 4002 from the vehicle position. Each time new range data become available, a sub-goal selection method is executed to generate a sub-goal 4006 and determine regions of safe navigation (free-space 4010) for the steering decision method. The frequency at which the sub-goal selection method can be executed depends on the rate at which the scanner 3804 or 404 can collect data. The achievable vehicle speed, in turn, depends on this frequency of execution.

For the steering decision method, a higher sampling rate is desirable in order to produce a smooth path. Therefore, the steering decision method is executed more frequently than the sub-goal method.

The basic flow of the sub-goal method is the following:

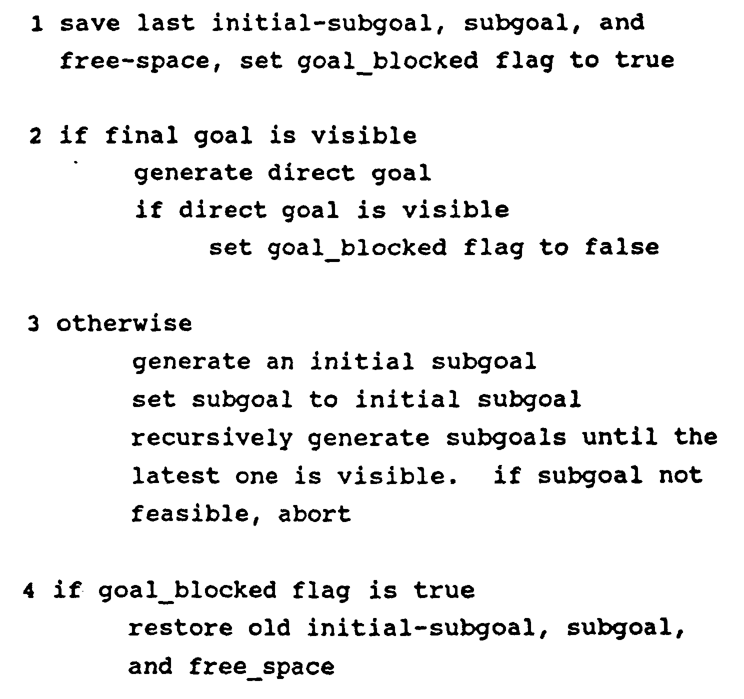

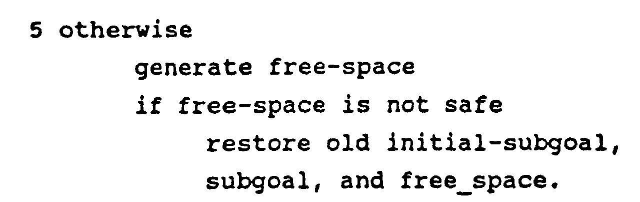

Sub-goal Method: First (step 1 above), the initial-subgoal, subgoal, and free-space generated from the previous iteration is saved. This assures that when the newly generated subgoal is not safe, the old subgoal can continue to be pursued.

Next (step 2 above), when the final goal is visible, attempt to generate a direct goal which is not associated with any obstacles 4002. Although the final goal is visible in the local map, it does not necessarily mean that no obstacle is blocking the final goal because obstacles outside the scanner range (both distance and angular wise) will not be represented in the local map. Therefore, when generating a direct goal, ensure that the goal is located in the cone area which is covered by the scanner 3804 or 404 to avoid placing a subgoal on or behind an obstacle 4002 that is not in the local map.

The next step (step 3 above) handles the situation where the final goal is blocked by an obstacle 4002 in the local map. In this case, the obstacle 4002 that blocks the line of sight to the final goal is first determined.

Given a flowchart blocking obstacle, there are two possible ways of going around it. If both edges of the obstacle are in the range of the scanner 3804 or 404, we may choose to go around the edge which gives the minimum sum of the distances from the vehicle 102 to edge and from the edge to the final distance. If only one edge of the obstacle 4002 is in the range, choose that edge to go around. If none of the edges is visible, always arbitrarily choose the left edged to go around. Once the edge to go around is determined, place the initial subgoal away from the edge at a distance that is proportional to the vehicle size.

Because of this displacement, the resulting subgoal may be blocked by other obstacles 4002. This calls for the recursive generation of subgoal on the obstacle, which blocks the line of sight to the subgoals just generated. This recursive process continues until a subgoal visible to the vehicle 102 is generated. Each subgoal so generated is checked for viability. By viability it is meant that the subgoal does not lead the vehicle 102 towards a gap between two obstacles 4002 which is too small for the vehicle to pass through. When such a condition is detected, the vehicle 102 will stop.

The direct subgoal generated in the second step (step 2 above) could possibly be obscured from the vehicle 102. If such is indeed the case, the old subgoals from the previous iteration is restored and used next (step 4 above).

In the final step (step 5 above), generate the free-space 4010 for the visible subgoal, which is a triangular region that contains no obstacles. Once the free-space 4010 is generated, the safeness of the subgoal and free-space 4010 can be determined. When the new subgoal and free-space 4010 is not safe, the old subgoal and free-space is again retained. Otherwise, the new subgoal and free-space is used.

The steering decision method of the present invention is composed of two major components:
transferring state constraints to control constraints; and determination of the desired control vector.

Once the control constraints and the desired control vector are computed, the control vectors can be determined using optimization techniques well known in the art.

### 4. RETURN TO PATH

The present invention includes a method, as shown diagrammatically in Figure 10, whereby a safe path around a detected object 4002 will be plotted and navigated so that the vehicle 102 will reacquire the reference path after avoiding the object 4002.

### 5. SCANNER SYSTEM

### a. INTRODUCTION

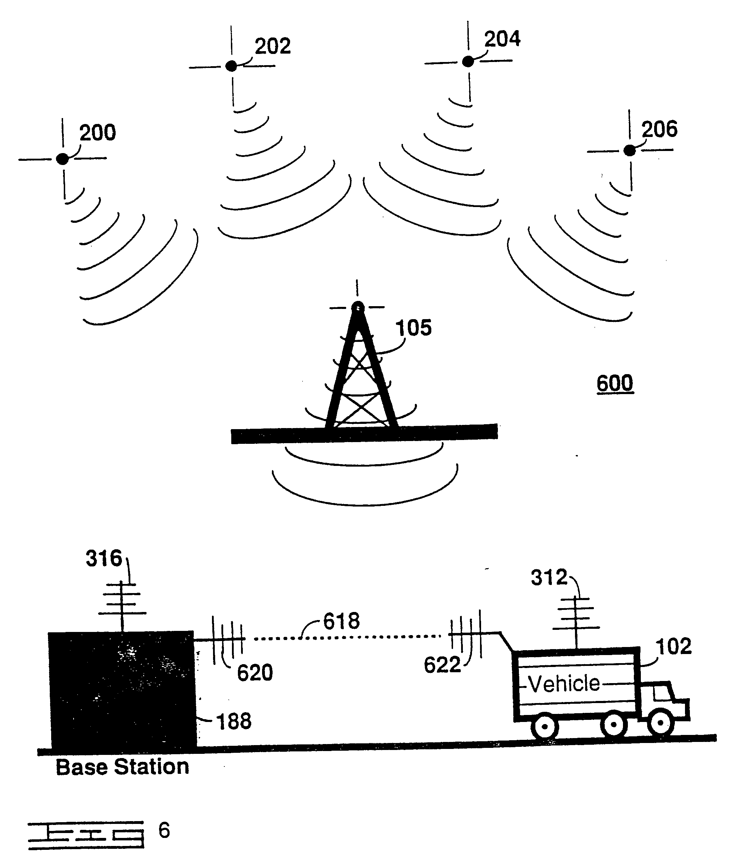

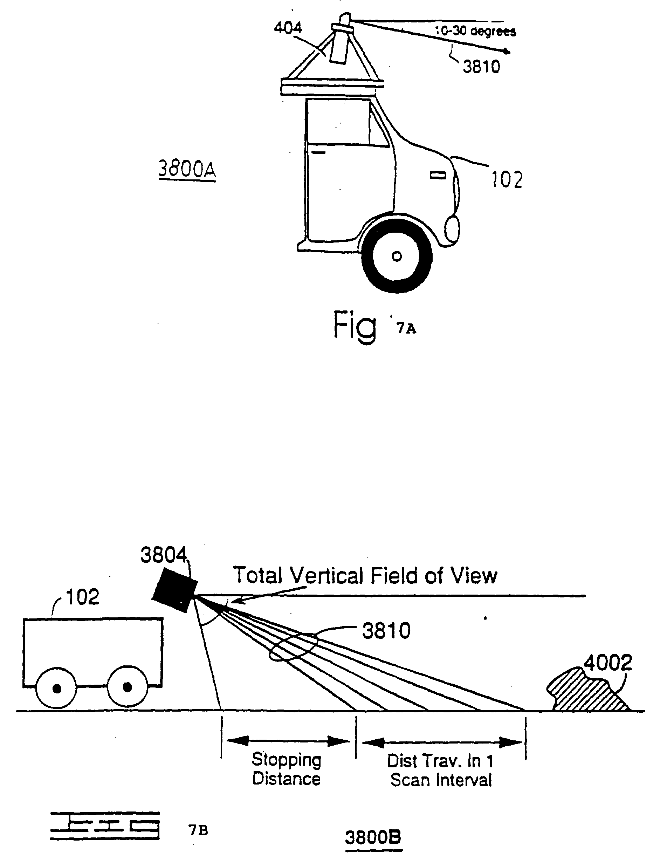

Referring to Figures 7 and 11, the present invention also includes a laser scanner system 404. The scanner 404 is used to find obstructions 4002 (See Figure 40) that randomly crop up in the vehicle 102 path, as previously discussed.

Sources of such obstructions 4002 may be varied and numerous depending on the particular work site. They may include fallen trees and branches, boulders, moving and parked vehicles, and people.

The scanner 404 gives the autonomous vehicle 102 the ability to detect and deal with the external world as conditions require.

### b. LASER SCANNER

The major components of the laser scanner system 404 are depicted in Figure 11.

A laser range finder 3804 uses an infra-red beam 3810 to measure distances between the range finder unit 3804 and the nearest object 4002. A brief pulse is transmitted by the unit 3804 and the time for the beam 3810 to reflect off an object 4002 and return gives the distance.

The beam 3810 from the range finder 404 is reflected by a rotating mirror 4222 giving the range finder 404 a 360° view of the world. Mirror rotation is accomplished through a motor 4206. The motor speed is controlled via a terminal 4210, which communicates with a motor amplifier/controller 4220 through a standard RS232C serial link 4224. Synchronization between laser firings and mirror angular position is done with an encoder.

Distance data on a line 4226 from the laser range finder 404 is taken by an interface circuit 4228, which transmits the data differentially to a buffer circuit 4214. Individual pieces of data are collected by the buffer circuit 4214 until the mirror 4222 makes one full revolution. This set of data comprises one scan. When a scan is complete, the buffer circuit 4214 signals a processor 4212, whereupon data for the entire scan is transferred to the processor 4212 for processing.

### c. SCANNER SYSTEM INTERFACE

The interface circuit 4228 has three functions.

First, it acts as a safety monitor. A situation could occur where the mirror 4222 would stop rotating, as in the case of the drive belt 4230 between the motor 4206 and mirror 4222 breaking. Under this condition, the laser 4204 would continue to fire, and since the mirror 4222 is stationary, it would fire at a single point (dangerous for anyone looking directly into the laser beam). The interface circuit 4228, however, senses when the angular velocity of the mirror 4222 falls below half a revolution per second, and disables the laser 4204 if such a condition occurs.

The second function is to disable the laser 4204 from firing for part of the 360 degrees scan area. Typically, the laser scanner unit 404 will be mounted in front of a vehicle 102, and the field of interest is in the 180 degree area in front of the vehicle. The vehicle itself will block the back portion of the 360 degree scan area. In this case, the circuitry 4228 will prevent the laser 4204 from firing into the vehicle, extending the life of the laser diode while receiving range data for the area in front of the vehicle. The enabling and disabling of the laser range-finder 4204 is done through two sensors (not shown) mounted near the mirror housing 4222. For testing purposes, or for applications where a 360 degree scan is desirable, the disable feature can be turned off through a DIP switch.

The third function of the circuit 4228 is to convert signals between single ended and differential form. TTL signals from the laser unit 4204 are differentially transmitted to the buffer circuit 4214, and differentially transmitted signals from the buffer circuit 4214 are converted to TTL levels. This prevents noise contamination along the cable 4226 connecting the two circuits.

### d. SCANNER SYSTEM BUFFER CIRCUIT

The function of the buffer circuit 4214 is to synchronize laser 404 firings with the angular position of the mirror 4222, to collect data for one complete scan, and to transmit the scan to computer 4214 for processing.

The angular position of the mirror 4222 can be determined through signals sent by the encoder 4208. The buffer circuit 4214 uses two signals from the encoder 4208: the Z and A channels.

The Z channel is the encoder index; it gets asserted once per revolution of the encoder 4208, and is used to signal the beginning of the scan area.

The A channel is one line of the two line quadrature output of the encoder 4208, and pulses 1000 times per revolution of the encoder. This channel is used to trigger laser firings.

One additional signal is needed to fully synchronize the scan field with the encoder signals. There is a gearing ratio of 2:1 between the encoder/motor 4206 and the mirror 4222. Two revolutions of the encoder 4208 rotates the mirror 4222 once. This translates to 2Z channel pluses and 2000 A channel pulses per revolution of the mirror 4222, and the inability to differentiate the beginning of the first half of the scan with the beginning of the second half.

To fully synchronize the scan field, the DB (dead band) signal generated by the interface circuit 4222 is used. The DB signal, used to disable the laser 4204 from firing in the back half of the scan, allows the differentiation of the front and back halves of the scan. The Z and DB signal together signal the beginning of the scan area.

The second task of the buffer circuit 4214, to collect data for one complete scan, is accomplished through the A channel of the encoder 4208. The 2000 pulses of the channel are divided by either 2, 4, 8, or 16, selected through DIP switches (not shown) on the circuit board 4228. This allows the number of data points per scan to be varied between 1000, 500, 250, and 125. The divided signal is used to trigger the laser range-finder 4204 at appropriate angular intervals, and to store the resulting range data in memory 4214.

The sequence of events is as follows. W (write) is asserted one clock cycle upon a rising edge on the divided A signal. At this point, data from a previous T (laser trigger) is available and is stored in memory 4214. T is asserted the following clock cycle, triggering the laser and putting the resulting range data onto the memory input bus 4226. This data is written on the next W pulse, repeating the cycle.

The final task of the buffer circuit 4214 is to transmit the scan data to a computer 4212 for processing. Completed scans are signaled by the Z and the DB signals (the beginning of a scan is also the end of a previous one). Upon a completed scan, an interrupt request line is asserted, and remains asserted until either the mirror 4222 has made half a revolution, or the processor 4212 acknowledges the interrupt. In the first case, the half revolution of the mirror 4222 is signaled by a subsequent Z pulse and indicates a timeout condition; the processor 4212 has failed to respond and the data is lost.

In the normal case, the interrupt is acknowledged. Upon receipt of the acknowledgement, STR (data strobe) is asserted and held until IBF (input buffer full) is received. During this time, data is put on the data bus 4230 and may be ready by the computer 4212. Data is valid on the bus 4230 until IBF is asserted, at which time STR is deasserted and the data removed from the bus 4230. Once the processor 4212 detects the de-assertion of STR, it de-asserts IBF. This causes STR to be asserted for the next piece of data, repeating the cycle.

Scan data is collected and stored in two memory banks 4214. This avoids shared memory and synchronization problems between scan storage and scan transmission. Data for a new scan is stored in one bank, while the previous scan is being transmitted from the other bank.

The buffer circuit 4214 removes from the processor 4212 the responsibility of synchronizing laser findings with mirror position and collecting individual pieces of data. It allows more efficient use of CPU time, as data is received in scan sized chunks. The processor 4212 spends its time processing the data, not in collecting it.

## Claims

1. A computer based method (4150), for use with a vehicle (102), for projecting road edges of a road (3312) ahead of the vehicle (102) in an image plane (3900), which computer based method (4150) comprises the steps of:
(1) calculating edge points of the road (3312) from stored road data;
(2) projecting the edge points to an image plane (3900);
(3) determining a left edge point (3902) and a right edge point (3902) of a scan line (3904) of range data, which points correspond to left and right edges of the road (3312); and
(4) detecting for at least one of an obstacle (4002) or a discontinuity between the left edge point (3902) and the right edge point (3902).

2. A method (4150) according to claim 1, further comprising the step of:
(5) fitting scan line data between the left edge point (3902) and the right edge point (3902) with either of a constant or a polynomial of at least a first order.

3. A method (4150) according to claim 2, further comprising the steps of:
(6) estimating road crown with a first coefficient of the polynomial, road bank with a second coefficient of the polynomial, and road height with a third coefficient of the polynomial;
(7) building an estimated road profile from the estimates of road bank, crown, and height of step (6); and
(8) comparing the estimated profile with an actual measured profile to detect obstacles (4002).

4. A computer based system (4150), for use with a vehicle (102), for projecting road edges of a road (3312) ahead of the vehicle (102) in an image plane (3900), which computer based system (4150) comprises:
(1) means for calculating edge points of the road (3312) from stored road data;
(2) means for projecting the edge points to an image plane (3900);
(3) means for determining a left edge point (3902) and a right edge point (3902) of a scan line (3904) of range data, which points correspond to left and right edges (3902) of the road (3312); and
(4) means for detecting at least one of an obstacle (4002) or discontinuity between the left edge point (3902) and the right edge point (3902).

5. A system (4150) according to claim 4, further comprising:
(5) means for fitting scan line data between the left edge point (3902) and the right edge point (3902) with either of a constant or a polynomial of at least a first order.

6. A system (4150) according to claim 5, further comprising:
(6) means for estimating road crown with a first coefficient of the polynomial, road bank with a second coefficient of the polynomial, and road height with a third coefficient of the polynomial;
(7) means for building an estimated road profile from the estimates of road bank, crown, and height of step (6); and
(8) means for comparing the estimated profile with an actual measured profile to detect obstacles (4002).

7. A method according to claim 1, comprising the further steps of:
determining a stopping distance of the vehicle (102);
selecting one or more scan lines (3904) of the image (3900) which are beyond the stopping distance; and
processing range data from the selected scan lines (3904) between the left and right edge points (3902) to detect for obstacles (4002).

8. A system (4150) according to claim 4, further comprising:
means for determining a stopping distance of the vehicle (102);
means for selecting one or more scan lines (3904) of the image (3900) which are beyond the stopping distance (3820);
means for processing range data from scan lines (3904) selected by the selecting means between the left and right edge points (3902) to detect for obstacles (4002).

9. A method (4150) according to claim 1 comprising the further steps of:
determining a left edge point and a right edge point (3902) of each scan line (3904) in the image;
modeling road height by processing scan line data between the left and right edge points (3902); and
comparing the modeled road height with expected road height to detect deviations indicative of an obstacle (4002).

10. A method (4150) of detecting an object (4002) according to claim 9, wherein the step of modeling road height comprises the steps of:
(a) finding center points of the road (3312) for each scan line;
(b) determining the height of the center points;
(c) fitting a third order profile to the center points; and
(d) performing thresholding on height data.

11. A system (4150) according to claim 4 further comprising:
means for finding edge points of a road (3312) from stored road data;
means for projecting the edge points onto a road image (3900) made of scan lines (3904);
means for determining a left edge point (3902) and a right edge point (3902) of each scan line (3904) in the image (3900);
means for modeling road height by processing scan line data between the left and right edge points (3902); and
means for comparing the modeled road height with expected road height to detect deviations indicative of an obstacle (4002).

12. A system (4150) for detecting an object (4002) according to claim 11, wherein the means for modeling road height comprises:
(a) means for finding center points of the road (3312) for each scan line (3904);
(b) means for determining the height of the center points;
(c) means for fitting a third order profile to the center points; and
(d) means for performing thresholding on height data.

## Patentansprüche

1. Verfahren (4150) auf Computerbasis zur Verwendung mit einem Fahrzeug (102) zum Projizieren von Fahrbahnrändern einer Straße (3312) vor dem Fahrzeug (102) in eine Bildebene (3900), wobei das Verfahren (4150) auf Computerbasis die folgenden Schritte aufweist:
(1) Berechnen von Randpunkten der Straße (3312) aus gespeicherten Straßendaten;
(2) Projizieren der Randpunkte auf eine Bildebene (3900);
(3) Bestimmen eines linken Randpunktes (3902) und eines rechten Randpunktes (3902) einer Scanlinie (3904) aus Bereichsdaten, wobei die Punkte dem linken bzw. rechten Rand der Straße (3312) entsprechen; und
(4) Suchen nach einem Hindernis (4002) und/oder einer Diskontinuität zwischen dem linken Randpunkt (3902) und dem rechten Randpunkt (3902).

2. Verfahren (4150) gemäß Anspruch 1, wobei das Verfahren ferner den folgenden Schritt aufweist:
(5) Einpassen von Scanliniendaten zwischen dem linken Randpunkt (3902) und dem rechten Randpunkt (3902) mit entweder einer Konstanten oder einem Polynom mindestens erster Ordnung.

3. Verfahren (4150) gemäß Anspruch 2, wobei das Verfahren ferner die folgenden Schritte aufweist:
(6) Schätzen einer (erhöhten) Fahrbahnmitte mit einem ersten Koeffizienten des Polynoms, des Fahrbahnrands bzw.-seitenstreifens mit einem zweiten Koeffizienten des Polynoms, und der Straßenhöhe mit einem dritten Koeffizienten des Polynoms;
(7) Erstellen eines geschätzten Straßenprofils aus den Schätzungen von Fahrbahnrand, -mitte und -höhe gemäß Schritt (6); und
(8) Vergleichen des geschätzten Profils mit einem tatsächlich gemessenen Profil, um Hindernisse (4002) zu detektieren.

4. System (4150) auf Computerbasis zur Verwendung mit einem Fahrzeug (102) zum Projizieren von Straßenrändern einer Straße (3312) vor dem Fahrzeug (102) in eine Bildebene (3900), wobei das System (4150) auf Computerbasis folgendes aufweist:
(1) Mittel zum Berechnen von Randpunkten der Straße (3312) aus gespeicherten Straßendaten;
(2) Mittel zum Projizieren der Randpunkte auf eine Bildebene (3900);
(3) Mittel zum Bestimmen eines linken Randpunktes (3902) und eines rechten Randpunktes (3902) einer Scanlinie (3904) aus Bereichsdaten, wobei die Punkte den linken bzw. rechten Rändern (3902) der Straße (3312) entsprechen; und
(4) Mittel zum Detektieren von einem Hindernis (4002) und/oder einer Diskontinuität zwischen dem linken Randpunkt (3902) und dem rechten Randpunkt (3902).

5. System (4150) gemäß Anspruch 4, wobei das System ferner folgendes aufweist:
(5) Mittel zum Einpassen von Scanliniendaten zwischen dem linken Randpunkt (3902) und dem rechten Randpunkt (3902) mit entweder mit einer Konstanten oder mit einem Polynom mindestens erster Ordnung.

6. System (4150) gemäß Anspruch 5, wobei das System ferner folgendes aufweist:
(6) Mittel zum Schätzen der (erhöhten) Fahrbahnmitte mit einem ersten Koeffizienten des Polynoms, des Straßenrands bzw. des Seitenstreifens mit einem zweiten Koeffizienten des Polynoms, und der Straßenhöhe mit einem dritten Koeffizienten des Polynoms;
(7) Mittel zum Erstellen bzw. Aufbauen eines geschätzten Straßenprofils aus den Schätzungen für Straßenrand, -mitte, und -höhe gemäß Schritt (6); und
(8) Mittel zum Vergleichen des geschätzten Profils mit einem tatsächlich gemessenen Profil, um Hindernisse (4002) zu detektieren.

7. Verfahren gemäß Anspruch 1, wobei das Verfahren ferner die folgenden Schritte aufweist:
Bestimmen eines Anhaltewegs des Fahrzeugs (102);
Auswählen von einer oder mehreren Scanlinien (3904) des Bildes (3900), die sich jenseits des Anhalteweges befinden; und
Verarbeiten von Bereichsdaten aus den ausgewählten Scanlinien (3904) zwischen den linken bzw. rechten Randpunkten (3902), um Hindernisse (4002) zu detektieren.

8. System (4150) gemäß Anspruch 4, wobei das System ferner folgendes aufweist:
Mittel zum Bestimmen eines Anhaltewegs des Fahrzeugs (102);
Mittel zum Auswählen einer oder mehrerer Scanlinien (3904) des Bildes (3900), die sich jenseits des Anhalteweges (3820) befinden;
Mittel zum Verarbeiten von Bereichsdaten aus den durch die Auswahlmittel ausgewählten Scanlinien (3904) zwischen den linken bzw. rechten Randpunkten (3902), um Hindernisse (4002) zu detektieren.

9. Verfahren (4150) gemäß Anspruch 1, wobei das Verfahren ferner die folgenden Schritte aufweist:
Bestimmen eines linken Randpunkts und eines rechten Randpunkts (3902) jeder Scanlinie (3904) im Bild;
Modellieren der Straßen- bzw. Fahrbahnhöhe durch Verarbeiten von Scanliniendaten zwischen den linken bzw. rechten Randpunkten (3902); und
Vergleichen der modellierten Straßen- bzw. Fahrbahnhöhe mit der erwarteten Straßen- bzw. Fahrbahnhöhe, um Abweichungen als Anzeige eines Hindernisses (4002) zu detektieren.

10. Verfahren (4150) zum Detektieren eines Gegenstands (4002) gemäß Anspruch 9, wobei der Schritt des Modellierens der Straßen- bzw. Fahrbahnhöhe die folgenden Schritte aufweist:
(a) Auffinden von Mittelpunkten der Straße (3312) für jede Scanlinie;
(b) Bestimmen der Höhe der Mittelpunkte;
(c) Einpassen eines Profils dritter Ordnung auf die Mittelpunkte; und
(d) Durchführen einer Schwellenwertberechnung mit den Höhendaten.

11. System (4150) gemäß Anspruch 4, wobei das System ferner folgendes aufweist:
Mittel zum Auffinden von Randpunkten der Straße (3312) aus gespeicherten Straßendaten;
Mittel zum Projizieren der Randpunkte auf ein Straßenbild (3900), welches aus Scanlinien (3904) besteht;
Mittel zum Bestimmen eines linken Randpunktes (3902) und eines rechten Randpunktes (3902) jeder Scanlinie (3904) in dem Bild (3900);
Mittel zum Modellieren der Straßen- bzw. Fahrbahnhöhe durch Verarbeiten von Scanliniendaten zwischen den linken und rechten Randpunkten (3902); und
Mittel zum Vergleichen der modellierten Straßen- bzw. Fahrbahnhöhe mit der erwarteten Straßen- bzw. Fahrbahnhöhe, um Abweichungen als Anzeige eines Hindernisses (4002) zu detektieren.

12. System (4150) zum Detektieren eines Gegenstands (4002) gemäß Anspruch 11, wobei die Mittel zum Modellieren der Straßen- bzw. Fahrbahnhöhe folgendes aufweisen:
(a) Mittel zum Finden von Mittelpunkten der Straße (3312) für jede Scanlinie (3904);
(b) Mittel zum Bestimmen der Höhe der Mittelpunkte;
(c) Mittel zum Einpassen eines Profils dritter Ordnung auf die Mittelpunkte; und
(d) Mittel zum Durchführen einer Schwellenwertberechnung mit den Höhendaten.

## Revendications

1. Procédé informatisé (4150) destiné à être utilisé avec un véhicule (102) pour projeter des bords de route d'une route (3312) en avant du véhicule (102) dans un plan image (3900), ce procédé informatisé (4150) comprenant les étapes suivantes :
(1) calcul de points de bord de la route (3312) à partir de données de route mémorisées ;
(2) projection des points de bord sur un plan d'image (3900) ;
(3) détermination d'un point de bord gauche (3902) et d'un point de bord droit (3902) d'une ligne de balayage (3904) de données de distance, ces points correspondant aux bords gauche et droit de la route (3312) ; et
(4) détection au moins d'un obstacle (4002) ou d'une discontinuité entre le point de bord gauche (3902) et le point de bord droit (3902).

2. Procédé (4150) selon la revendication 1, comprenant en outre l'étape :
(5) d'ajustement des données de ligne de balayage entre le point de bord gauche (3902) et le point de bord droit (3902) à l'aide d'une constante ou d'un polynôme au moins d'un premier ordre.

3. Procédé (4150) selon la revendication 2, comprenant en outre les étapes suivantes :
(6) estimation de la courbure de la route avec un premier coefficient du polynôme, de l'inclinaison de la route avec un deuxième coefficient du polynôme et de la hauteur de la route avec un troisième coefficient du polynôme ;
(7) construction d'un profil de route estimé à partir des estimations d'inclinaison, de courbure et de hauteur de route de l'étape (6) ; et
(8) comparaison du profil estimé avec un profil mesuré réel pour détecter des obstacles (4002).

4. Système informatisé (4150) destiné à être utilisé avec un véhicule (102) pour projeter des bords de route d'une route (3312) en avant du véhicule (102) dans un plan d'image (3900), ce système informatisé (4150) comprenant :
(1) un moyen pour calculer des points de bord de la route (3312) à partir de données de route mémorisées ;
(2) un moyen pour projeter les points de bord sur un plan image (3900) ;
(3) un moyen pour déterminer un point de bord gauche (3902) et un point de bord droit (3902) d'une ligne de balayage (3904) de données de distance, ces points correspondant aux bords gauche et droit (3902) de la route (3312) ; et
(4) un moyen pour détecter au moins un obstacle (4002) ou une discontinuité entre le point de bord gauche (3902) et le point de bord droit (3902).

5. Système (4150) selon la revendication 4, comprenant en outre :
(5) un moyen pour ajuster des données de ligne de balayage entre le point de bord gauche (3902) et le point de bord droit (3902) à l'aide d'une constante ou d'un polynôme au moins d'un premier ordre.

6. Système (4150) selon la revendication 5, comprenant en outre :
(6) un moyen pour estimer la courbure de la route avec un premier coefficient du polynôme, l'inclinaison de la route avec un deuxième coefficient du polynôme et la hauteur de la route avec un troisième coefficient du polynôme ;
(7) un moyen pour construire un profil de route estimé à partir des estimations d'inclinaison, de courbure et de hauteur de la route de l'étape (6) ; et
(8) un moyen pour comparer le profil estimé à un profil réel mesuré pour détecter des obstacles (4002).

7. Procédé selon la revendication 1, comprenant les étapes supplémentaires suivantes :
détermination d'une distance d'arrêt du véhicule (102) ;
sélection d'une ou plusieurs lignes de balayage (3904) de l'image (3900) qui sont au-delà de la distance d'arrêt ; et
traitement des données de distance à partir des lignes de balayage sélectionnées (3904) entre les points de bord gauche et droit (3902) pour la détection des obstacles (4002).

8. Système (4150) selon la revendication 4, comprenant en outre :
un moyen pour déterminer une distance d'arrêt du véhicule (102) ;
un moyen pour sélectionner une ou plusieurs lignes de balayage (3904) de l'image (3900) qui sont au-delà de la distance d'arrêt (3820) ;
un moyen pour traiter les données de distance à partir des lignes de balayage (3904) sélectionnées par le moyen de sélection entre les points de bord gauche et droit (3902) pour détecter des obstacles (4002).

9. Procédé (4150) selon la revendication 1, comprenant les étapes supplémentaires de :
détermination d'un point de bord gauche et d'un point de bord droit (3902) de chaque ligne de balayage (3904) dans l'image ;
modélisation de la hauteur de route par traitement des données de lignes de balayage entre les points de bord gauche et droit (3902) ; et
comparaison de la hauteur de route modélisée avec la hauteur de route attendue pour détecter les écarts indiquant un obstacle (4002).

10. Procédé (4150) de détection d'un objet (4002) selon la revendication 9, dans lequel l'étape de modélisation de la hauteur de route comprend les étapes suivantes :
(a) recherche des points centraux de la route (3312) pour chaque ligne de balayage ;
(b) détermination de la hauteur des points centraux ;
(c) ajustement d'un profil du troisième ordre sur les points centraux ; et
(d) limitation à un seuil des données de hauteur.

11. Système (4150) selon la revendication 4, comprenant en outre :
un moyen pour rechercher des points de bord d'une route (3312) à partir de données de route mémorisées ;
un moyen pour projeter les points de bord sur une image de route (3900) faite de lignes de balayage (3904) ;
un moyen pour déterminer un point de bord gauche (3902) et un point de bord droit (3902) de chaque ligne de balayage (3904) sur l'image (3900) ;
un moyen pour modéliser la hauteur de route par traitement des données de lignes de balayage entre les points de bord gauche et droit (3902) ; et
un moyen pour comparer la hauteur de route modélisée à la hauteur de route attendue pour détecter des écarts indiquant un obstacle (4002).

12. Système (4150) pour détecter un objet (4002) selon la revendication 11, dans lequel le moyen de modélisation de la hauteur de route comprend :
(a) un moyen pour trouver des points centraux de la route (3312) pour chaque ligne de balayage (3904) ;
(b) un moyen pour déterminer la hauteur des points centraux ;
(c) un moyen pour ajuster un profil du troisième ordre sur les points centraux ; et
(d) un moyen pour exécuter un seuil sur les données de hauteur.
